# EUROPÄISCHE PATENTANMELDUNG

(11) **EP 1 168 761 A2**
(43) Veröffentlichungstag der Anmeldung: **02.01.2002**
(21) Anmeldenummer: 01115358.2
(22) Anmeldetag: 26.06.2001
(51) Int. Cl.: H04L 29/06

(54) **Verfahren und Datentelegramm zur Übertragung von Daten**

(30) Priorität: 28.06.2000 DE 10030521
(71) Anmelder: BECKER GmbH, D-76307 Karlsbad (DE)
(72) Erfinder: Bähren, Frank, 76137 Karlsruhe (DE); Wietzke, Joachim, 76228 Karlsruhe (DE); Schöpp, Harald, 76275 Ettlingen (DE); Bischoff, Joachim, 75210 Keltern (DE); Lappe, Dirk, 76228 Karlsruhe (DE)
(74) Vertreter: Patentanwälte Westphal, Mussgnug & Partner

(57) **Zusammenfassung**

Um ein Netzwerk, z. B. ein MOST-Netzwerk, auch für Datentelegramme anderen Standards kompatibel zu gestalten, sind im gemäß dem Standard des Netzwerks oder einem anderen Standard formatierten Anfangsteil (A) des Datentelegramms Standardinformationen vorgesehen, die angeben, dass der restliche Teil (B, C) des Datentelegramms gemäß einem zweiten Standard (TCP/IP) formatiert ist und um welchen Standard es sich dabei handelt.

## Beschreibung

Die Erfindung betrifft ein Verfahren zur Übertragung von Daten in einem Netzwerk mittels Datentelegrammen sowie ein Datentelegramm zur Übertragung von Daten in einem Netzwerk.

In Netzwerken, die Datenquellen, Datensenken und Transceiver miteinander vernetzen, werden Daten mittels Datentelegrammen übertragen, die nach genormten Standards oder Protokollen formatiert sind, z. B. in Rahmen und Blöcke unterschiedlicher Länge. In einem Netzwerk lassen sich jedoch Daten nicht mittels Datentelegrammen übertragen, die nicht der Norm dieses Netzwerkes entsprechen. So definiert z. B. der MOST-Standard das Format für Datentelegramme, mittels denen Daten in einer nach dem MOST-Standard konzipierten Multimediaanlage übertragen werden. MOST-Multimediaanlagen sind zum Einsatz in Kraftfahrzeugen entwickelt worden. Die Abkürzung MOST steht für Media Oriented Systems Transport oder Media Oriented Synchronous Transfer.

Infolge der unterschiedlichen Standards und Protokolle für Datentelegramme ist es z. B. nicht möglich, in einer MOST-Multimediaanlage eines Kraftfahrzeuges Daten mittels Datentelegrammen zu übertragen, die nach dem im Internet vorgeschriebenen Transmission Control Protocol - abgekürzt TCP - oder gemäß dem Internet Protocol - abgekürzt IP - formatiert sind.

Es ist daher Aufgabe der Erfindung, ein Verfahren zur Übertragung von Daten in einem Netzwerk mittels Datentelegrammen bzw. ein Datentelegramm zur Übertragung von Daten in einem Netzwerk so zu gestalten, dass im Netzwerk eine Datenübertragung auch mittels Datentelegrammen ermöglicht wird, die nicht der Norm des Netzwerkes entsprechen.

Verfahrensmäßig wird diese Aufgabe mit den Merkmalen des Anspruchs 1 dadurch gelöst, dass im Anfangsteil eines Datentelegramms an einer definierten Stelle Standardinformationen stehen, die angeben, dass der restliche Teil des Telegramms gemäß einem vorgebbaren Standard formatiert ist und um welchen Standard es sich dabei handelt und dass der vorgebbare Standard im Netzwerk definiert ist.

Ein Datentelegramm löst diese Aufgabe mit den im Anspruch 2 angegebenen Merkmalen dadurch, dass im Anfangsteil des Datentelegramms an einer definierten Stelle Standardinformationen vorgesehen sind, die angeben, dass der restliche Teil des Telegramms gemäß einem vorgebbaren Standard formatiert ist und um welchen Standard es sich dabei handelt.

Erfindungsgemäß stehen an einer definierten Stelle im Anfangsteil des Datentelegramms Standardinformationen, die angeben, dass der restliche Teil des Datentelegramms gemäß einem vorgebbaren Standard formatiert ist und um welchen Standard es sich dabei handelt. Die im Netzwerk miteinander vernetzten Geräte - z. B. Datenquellen, Datensenken und Transceiver - erkennen daher an diesen Standardinformationen, nach welchem Standard das empfangene Datentelegramm formatiert ist, und sind daher in der Lage, auch Datentelegramme mit einem netzwerkfremden Standard zu empfangen, zu senden und auszuwerten.

Der Anfangsteil des Datentelegramms kann nach dem Standard des Netzwerkes oder einem anderen Standard formatiert sein.

So ermöglichen das erfindungsgemäße Verfahren bzw. das erfindungsgemäße Datentelegramm es beispielsweise, dass in einer in einem Kraftfahrzeug eingebauten MOST-Multimediaanlage neben den MOST-Telegrammen auch Datentelegramme anderen Standards wie z. B. gemäß den Internetprotokollen TCP und IP formatierte Datentelegramme zur Datenübertragung eingesetzt werden können. Die Erfindung ermöglicht daher, die Kommunikation eines MOST-Netzwerkes mit dem Internet, ohne dass hierzu ein großer technischer Aufwand erforderlich ist. Eine MOST-Multimediaanlage, in der das erfindungsgemäße Verfahren verwirklicht ist und in der Daten gemäß dem erfindungsgemäßen Datentelegramm übertragbar sind, ist daher nicht auf den Einsatz von MOST-Telegrammen zur Datenübertragung eingeschränkt, sondern mit anderen Datentelegrammen kompatibel.

Die Erfindung wird anhand der Figuren nun näher beschrieben und erläutert.

In der Zeichnung zeigen:
- Figur 1: ein erstes Ausführungsbeispiel,
- Figur 2: ein zweites Ausführungsbeispiel,
- Figur 3: ein drittes Ausführungsbeispiel,
- Figur 4: ein viertes Ausführungsbeispiel eines erfindungsgemäßen Datentelegramms und
- Figur 5: ein MOST-Telegramm.

In der Figur 5 ist das Format eines MOST-Telegramms dargestellt. Der Anfangsteil A des MOST-Telegramms ist aus fünf Bytes 0, 1, 2, 3, und 4 aufgebaut. Im ersten Byte 0 ist die Funktionsblockidentifizierung, im zweiten Byte 1 die Zustandsidentifizierung, im dritten und vierten Byte 2 und 3 die Funktionsidentifizierung angegeben. Im fünften Byte 4 stehen die Telegrammidentifizierung und die Telegrammlänge. An das fünfte Byte 4 schließen sich die zu übertragenden Daten an.

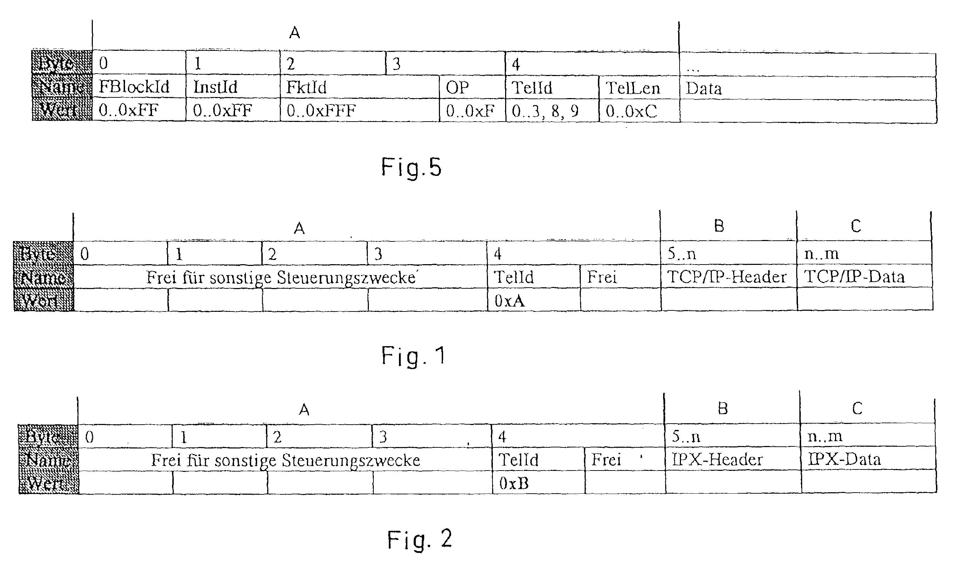

In der Figur 1 ist ein erstes Ausführungsbeispiel eines erfindungsgemäßen Datentelegramms abgebildet. Es handelt sich um ein Datentelegramm, dessen Anfangsteil A dem MOST-Protokoll bzw. -Standard entspricht. Die ersten vier Bytes 0, 1, 2 und 3 sind für Steuerungssignale reserviert. Im fünften Byte 4 stehen die Standardsonderinformationen, die beim ersten Ausführungsbeispiel angeben, dass der restliche Teil des Datentelegramms gemäß dem TCP/IP-Protokoll formatiert ist. Der auf den Anfangsteil A folgende restliche Teil ist in zwei Teile B und C aufgeteilt. Im Teil B stehen die zum TCP/IP-Header gehörenden Daten, während im Teil C die zu übertragenden Daten stehen.

In der Figur 2 ist ein zweites Ausführungsbeispiel eines erfindungsgemäßen Datentelegramms gezeigt, dessen Anfangsteil A dem MOST-Protokoll entspricht. Im fünften Byte 4 stehen wie beim vorangehenden Ausführungsbeispiel die Standardinformationen. Im Teil B sind die zu einem IPX-Header gehörenden Daten angeordnet, im folgenden Teil C stehen die zu übertragenden Daten im IPX-Format.

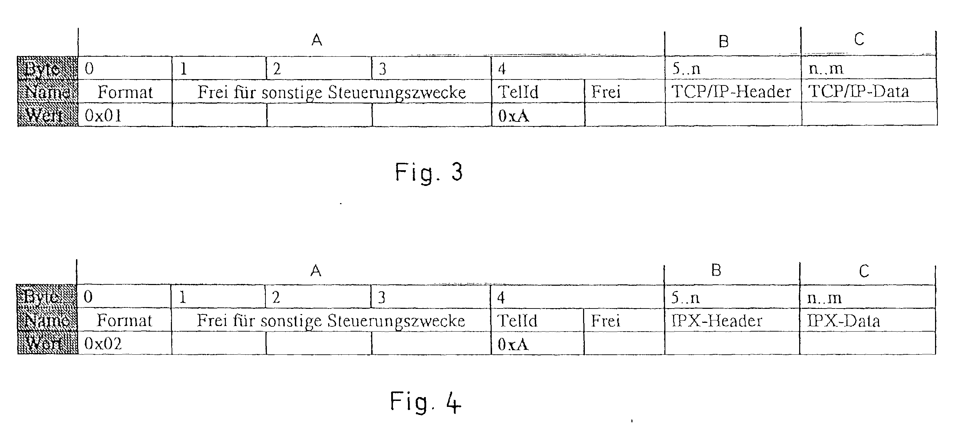

In der Figur 3 ist ein drittes Ausführungsbeispiel eines erfindungsgemäßen Datentelegramms dargestellt, dessen Anfangsteil A ebenfalls dem MOST-Protokoll entspricht. Die Standardinformationen stehen im fünften Byte 4. Im Teil B stehen wiederum Daten des TCP/IP-Headers. Im anschließenden Teil C stehen die zu übertragenden Daten.

In der Figur 4 ist ein viertes Ausführungsbeispiel eines erfindungsgemäßen Datentelegramms gezeigt, dessen Anfangsteil A ebenfalls dem MOST-Protokoll entspricht. Im fünften Byte 4 stehen die Standardinformationen. Der Teil B ist für Daten des IPX-Headers reserviert, während die zu übertragenden Daten dem Teil C zugeordnet sind.

Der Unterschied zwischen dem ersten Ausführungsbeispiel und dem dritten Ausführungsbeispiel sowie dem zweiten und dem vierten Ausführungsbeispiel liegt darin, dass dem dritten und dem vierten Ausführungsbeispiel im Byte 0 ein Wert zugeordnet ist.

Das erfindungsgemäße Verfahren und das erfindungsgemäße Datentelegramm sind jedoch keineswegs auf den Einsatz in einem MOST-Netzwerk beschränkt. Sie sind universell in Netzwerken beliebiger Struktur und beliebigen Standards einsetzbar.

### Bezugszeichenliste

- A: Anfangsteil
- B: Teil
- C: Teil
- 0: erstes Byte
- 1: zweites Byte
- 2: drittes Byte
- 3: viertes Byte
- 4: fünftes Byte

## Patentansprüche

1. Verfahren zur Übertragung von Daten in einem Netzwerk mittels Datentelegrammen,
**dadurch gekennzeichnet, dass** im Anfangsteil (A) eines Datentelegramms an einer definierten Stelle (4) Standardinformationen stehen, die angeben, dass der restliche Teil (B, C) des Datentelegramms gemäß einem vorgebbaren Standard formatiert ist und um welchen Standard es sich dabei handelt und dass der vorgebbare Standard im Netzwerk definiert ist.

2. Datentelegramm zur Übertragung von Daten in einem Netzwerk,
**dadurch gekennzeichnet, dass** im Anfangsteil (A) des Datentelegramms an einer definierten Stelle (4) Standardinformationen vorgesehen sind, die angeben, dass der restliche Teil (B, C) des Datentelegramms gemäß einem vorgebbaren Standard formatiert ist und um welchen Standard es sich dabei handelt.

3. Verfahren bzw. Datentelegramm nach Anspruch 1 bzw. 2,
**dadurch gekennzeichnet, dass** die Standardinformationen an einem unbesetzten oder für nicht relevante Informationen vorgesehenen Platz (4) im Anfangsteil (A) stehen.

4. Verfahren oder Datentelegramm nach Anspruch 1, 2 oder 3,
**dadurch gekennzeichnet, dass** das Datentelegramm in Rahmen, die Rahmen in Blöcke und die Blöcke in Bytes unterteilt sind.

5. Datentelegramm nach Anspruch 2,
**dadurch gekennzeichnet, dass** es sich bei dem Datentelegramm um ein MOST-Telegramm handelt, dessen Anfangsteil (A) aus fünf Bytes (0, 1, 2, 3, 4) aufgebaut ist, und dass die Standardinformationen im letzten Byte (4) des Anfangsteils (A) stehen.

6. Verfahren nach Anspruch 1,
**dadurch gekennzeichnet, dass** es sich bei dem Netzwerk um ein MOST-Netzwerk handelt, in welchem Daten mittels MOST-Telegrammen übertragen werden, deren Anfangsteil (A) aus fünf Bytes (0, 1, 2, 3, 4) besteht, und dass die Standardinformationen im letzten Byte (4) des Anfangsteils (A) stehen.

7. Verfahren oder Datentelegramm nach einem der vorangehenden Ansprüche 1 bis 6,
**dadurch gekennzeichnet, dass** der vorgebbare Standard, gemäß dem das Datentelegramm formatiert ist, dem Transmission Control Protocol - abgekürzt TCP - entspricht.

8. Verfahren oder Datentelegramm nach einem der Ansprüche 1 bis 6,
**dadurch gekennzeichnet, dass** der vorgebbare zweite Standard, gemäß dem das Datentelegramm formatiert ist, dem Internet Protocol - abgekürzt IP - entspricht.

9. Verfahren oder Datentelegramm nach einem der Ansprüche 1 bis 6,
**dadurch gekennzeichnet, dass** der vorgebbare Standard, gemäß dem das Datentelegramm formatiert ist, dem Internet Packet Exchange Protocol - abgekürzt IPX - entspricht.

10. Verfahren oder Datentelegramm nach einem der Ansprüche 1 bis 9,
**dadurch gekennzeichnet, dass** der Anfangsteil (A) des Datentelegramms gemäß dem Standard des Netzwerkes formatiert ist.
